# EUROPEAN PATENT SPECIFICATION

(11) **EP 0 482 489 B1**
(45) Date of publication and mention of the grant of the patent: **04.09.1996**
(21) Application number: 91117621.2
(22) Date of filing: 16.10.1991
(51) Int. Cl.: D02G 3/12, F16J 15/22

(54) **Compound for making packing seals**
Zusammenstellung für eine abdichtende Packung
Composé pour un joint de garnissage étanche

(30) Priority: 23.10.1990 IT 295290
(43) Date of publication of application: 29.04.1992
(73) Proprietor: Carrara, Sergio, I-24060 Adrara San Martino (Bergamo) (IT)
(72) Inventor: Carrara, Sergio, I-24060 Adrara San Martino (Bergamo) (IT)
(74) Representative: Lecce, Giovanni

(56) References cited:
- EP-A- 0 253 031
- FR-A- 2 595 725
- US-A- 2 221 453
- US-A- 2 562 262

## Description

The present invention relates to a compound for making packing seals according to the preamble of claim 1, substantially consisting of the combination of unbroken steel filaments and unbroken filaments of other individual and combined products such as carbon, pure graphite, Polybenzoimidazol (PBI), aramidic fibers, Polytetrafluoroethylene (PTFE) and the like combined together and twisted by a tear spinning process which causes altogether an unbroken spun configuration while the individual filaments are torn in pieces of varying length. Said configuration gives the twisted yarn high flexibility while being very strong due to the presence of a goodly percentage of steel filaments. Present twisted compounds used for the preparation of shaped braids suitable for use in making packing seals are preferably provided by the combination of unbroken steel threads coated with carbon fiber. Fr-A-2,595,725 discloses a fibrous material resistant to the combined action of both heat and pressure, constituted by an intimate blend of polybenzymidazole filaments and filaments of a metallic alloy based on nickel. The blend of filaments is broken by a stretching and controlled breaking spinning process. The blend can also include aramid filaments. The toughest and best qualified products presently known are achieved with unbroken stainless steel threads having a diameter between 0.08mm and 0.1mm and on which are wound carbon fibers. The braided combination of said coated threads produces tough braids containing 10% to 13% steel. Packing thus constituted, while being generally of good quality, displays some shortcomings and/or limitation in use. One of the shortcomings is due to said unbroken metallic threads which, due to their natural stiffness, oppose excessive resistance to transverse cutting during preparation of the pieces making up the packing. Said resistance, in addition to making cutting difficult, causes frayed cuts difficult to match for accurate sealing at the cut sections.

Another shortcoming is that the presence of metal internal threads gives the braids undesirable stiffness.

Other shortcomings are the fact that packing made up of the above mentioned filaments can be used only for certain applications and not others, such as for example valve stems, pistons and the like, because they cannot be subjected to axial sliding due to poor lubrication and poor resistance to temperature. The object of the present invention is to eliminate the above mentioned shortcomings.

According to the present invention the above object is achieved by the features in the characterizing part of claim 1. Particular embodiments of the invention are set out in dependent claims 2 to 10.

The filaments of steel and other individual or combined materials when twisted together in continuous yarns by a tear spinning process are very small, on the order of a few microns, and form very flexible assemblies easy to cut without fraying; said combinations of steel filaments and filaments of different fibers, combined and individual, such as carbon, pure graphite, aramidic fibers and the like can be mixed in braids and constitute compounds for the formation of very tough, flexible seals readily cut and self-lubricating.

The advantages of the present invention are essentially the fact that the seals provided display accurate cuts which are readily matched, very flexible and readily adaptable to the seats which contain them; they can include self-lubricating products; they are usable also for valve stems, pump pistons and the like and for any sliding application.

Another advantage of articles provided with combinations of carbon and stainless steel fibers is that the particles of carbon are capable of better protecting the steel filaments from high temperatures; said protection, being the result of greater availability of braiding between particles of steel and carbon due to the very nature of the small diameter filaments, can reach improvements of even 50% over conventional seals. In addition said configurations allow an increase of pressure resistance of 30% to 40%.

The invention is described in greater detail below with reference to the annexed drawing wherein -
FIG. 1 shows a very enlarged schematic view of the basic configuration of a combination of stainless steel filament yarns and filaments of one or more other materials such as carbon, graphite and/or others, and
FIG. 2 shows a piece of packing consisting of the interlacing of several yarns made from the combination of the above mentioned filaments twisted by a tear spinning process.

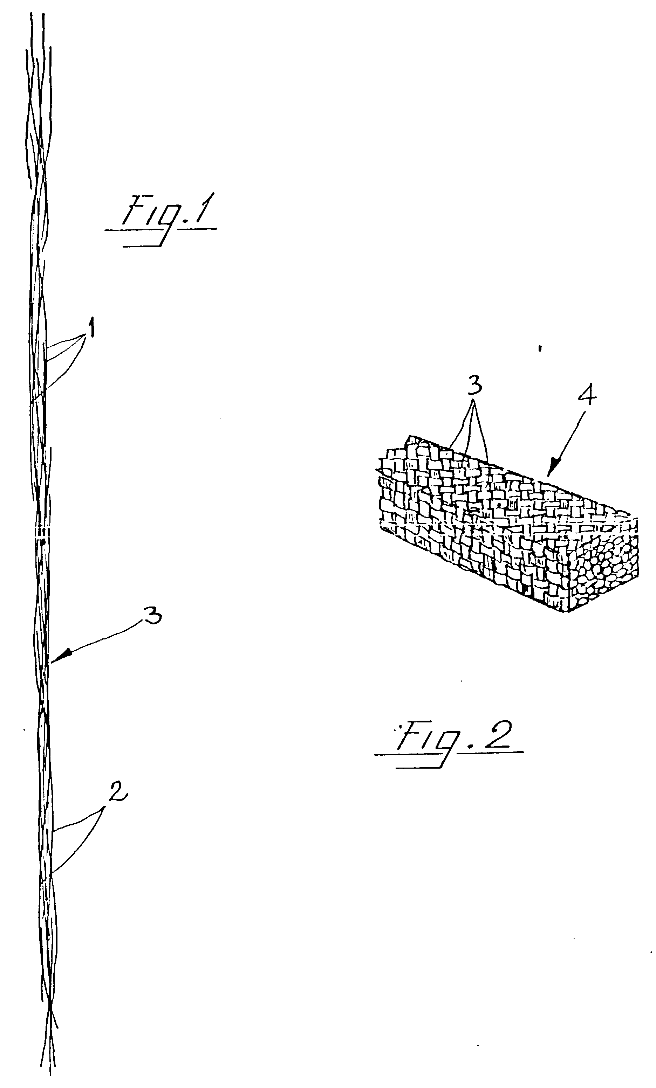

The figures illustrate a compound for the making of seals substantially formed by the twisting together of pluralities of stainless steel filaments (1) and filaments of other materials, single or combined, such as carbon (2), spun together by a tear spinning process. More precisely this process consists of twisting by spinning the filaments of the components together, simultaneously causing intermittent traction of a magnitude sufficient to produce each time the irregular tearing of part thereof without being separated or withdrawn from the other bounding filaments of the twisted assemblage. The completed yarns (3) thus achieved, although they display an intrinsic configuration substantially made up of lengths of filaments of variable and random length, spun and twisted together, and even though they hold uniform the percentage proportion preselected of the paired filamentous substances, they are extremely strong, flexible and easy to braid together to form packings (4).

By way of preferred but nonlimiting example, a combination of 20% to 25% of stainless steel filaments and 80% to 75% filaments of carbon or pure graphite having a diameter of 4 to 8 micron, gives rise to yarns which when braided make up packings having a flexibility, adaptability and predisposition to neat cutting without fraying greater than present packings, achieved with only 10% to 13% of unbroken steel threads coated with carbon fibers.

These results are achieved because, in addition to the configuration of the yarns achieved by tear spinning, the basic filaments of stainless steel and carbon, pure graphite, plastic fibers in general and the like, have dimensional characteristics limited to a few microns in diameter, for example 4 to 8 or more, depending on the expected requirements, which give them natural flexibility and clearly greater availability for clean cutting. As already mentioned above, the compound which is the subject matter of the present invention is achievable by combining said broken steel filaments (1) even with broken filaments of other materials (2) and in particular and preferably with preoxidized filaments or Polyacrylonitrile (PAN) filaments processed in oxygen-free temperatures to achieve carbonization or preoxidation, or with synthetic filaments such as those made from aramidic fibers, from fibers of Polytetrafluoroethylene (PTFE) or fibers of Polybenzoimidazol (PBI) and still others.

In any case, in addition to greater resistance owing to the higher percentage of steel in filaments present in the compound, there are achieved high characteristics of elasticity, self-lubrication, resistance to temperature, pressure and rotating or rubbing friction wear, depending on the intrinsic characteristics of the twisted filaments combined with the steel ones. The yarns (3) achieved by the described tear spinning process, before being used for the formation of braids (4), are preferably but not in a limited manner pretreated, for example in environments with dispersion of graphite or in the presence of corrosion inhibitors or even by immersion or spraying in aqueous solutions of metallic zinc or tungsten powders followed by drying in an oven.

These treatments have the function of increasing the already elevated quality of the basic filaments, improving their surface protection and antioxidizing and self-lubricating characteristics.

In comparison with present products the predominant characteristics of the packings (4) formed by interlacing yarns (3) achieved by tear spinning of steel filaments (1) and filaments of other suitable materials (2) in the assemblage are -
a) better general flexibility,
b) greater cutting ease without residual frayed particles,
c) steel particles of smaller size and better amalgamated or braided with those of other materials such as self-lubricating ones,
d) greater possibility of use even in sliding applications with reciprocal motion such as the movements of valve stems of pump pistons and of rotary motion such as centrifugal pumps and so forth,
e) increase in resistance to high temperatures due to the possible protection of the steel parts with the bounding ones, e.g. those of carbon and/or pure graphite, and
f) increase in resistance to high operating pressures due to better unit distribution of the combined materials and hence of their mean specific pressure.

## Claims

1. A compound for making packing seals comprising threads consisting of unbroken steel filaments (1) and unbroken filaments of other materials (2) combined together and twisted by an intermittent tear spinning process, characterized in that the filaments (2) of other materials are carbon or pure graphite filaments.

2. The compound according to claim 1, characterized in that the steel filaments (1) and the carbon or pure graphite filaments (2) have a diameter ranging from 4 to 8 or more micrometer.

3. The compound according to claim 1 or 2, characterized in that the threads consist of 20 to 25% of steel filaments (1) and 80 to 75% of carbon or pure graphite filaments (2) having a diameter of 4 to 8 micrometers.

4. The compound according to anyone of claims 1-3, characterized in that the threads of unbroken steel filaments (1) and of unbroken carbon or pure graphite filaments (2) are twisted and simultaneously subjected to an intermittent traction of a magnitude sufficient to cause irregular tearing of one or more filaments (1,2) each time.

5. The compound according to anyone of claims 1-4, characterized in that the threads (3) twisted and subjected to an intermittent tear spinning process, display an intrinsic configuration consisting of lengths of filaments of variable and random length and said configuration is continuous without fraying of the individual lengths in comparison with the bounding ones.

6. The compound according to claim 5, characterized in that the intrinsic flexibility of the threads (3) twisted and subjected to an intermittent tear spinning process, depends on the twisted combination of the lengths of the steel filaments (1) and of the carbon or graphite filaments (2), on the randmness of their length and position and on their diameter.

7. The compound according to anyone of claims 1-6, characterized in that the carbon or pure grafite filaments (2) are produced by oxidation and carbonization or graphitization treatments of polyacrylonitrile filaments.

8. The compound according to anyone of claims 1-7, characterized in that the threads (3) twisted and subjected to the intermittent tear spinning process, are treated with dispersion of graphite or with corrosion inhibitors.

9. The compound according to anyone of claims 1-8, characterized in that the threads (3) twisted and subjected to the intermittent tear spinning process, are dipped into or sprayed with aqueous solutions of metallic zinc or tungsten powders and then oven dryed.

10. The compound according to anyone of claims 1-9, characterized in that the threads (3) twisted and subjected to the intermittent tear spinning process are braided together to form packings (4).

## Patentansprüche

1. Zusammensetzung zum Herstellen von Verpackungsseilen mit Strängen aus ungebrochenen Stahlfilamenten (1) und ungebrochenen Filamenten aus anderen Materialien (2), die miteinander kombiniert und durch ein intermittierendes Reiß-Spinnverfahren verdreht bzw. verzwirnt sind,
**dadurch gekennzeichnet,**
daß die Filamente (2) aus anderen Materialien Filamente aus Kohlenstoff oder reinem Graphit sind.

2. Zusammensetzung nach Anspruch 1, dadurch gekennzeichnet, daß die Stahlfilamente (1) und die Filamente (2) aus Kohlenstoff oder reinem Graphit einen Durchmesser von 4 bis 8 Mikrometer und mehr haben.

3. Zusammensetzung nach Anspruch 1 oder 2, dadurch gekennzeichnet, daß die Stränge bestehend aus 20% bis 25% Stahlfilamenten (1) und Filamenten (2) aus 80% bis 75% Kohlenstoff oder reinem Graphit einen Durchmesser von 4 bis 8 Mikrometer haben.

4. Zusammensetzung nach einem der Ansprüche 1 bis 3, dadurch gekennzeichnet, daß die Stränge aus ungebrochenen Stahlfilamenten (1) und ungebrochenen Filamenten aus Kohlenstoff oder reinem Graphit (2) verzwirnt und gleichzeitig einer intermittierenden Zugausübung unterzogen sind, wobei die Zugausübung von einer Stärke ist, die ausreicht, um ein unregelmäßiges Reißen eines oder mehr Filamente (1, 2) bei jedem Vorgang zu verursachen.

5. Zusammensetzung nach einem der Ansprüche 1 bis 4, dadurch gekennzeichnet, daß die Stränge (3), die verzwirnt und einer intermittierenden Reiß-Spinnverfahren unterzogen sind, eine spezifische Konfiguration haben, bestehend aus Längsstücken von Filamenten von variiender und unregelmäßiger Länge, wobei diese Konfiguration ohne Ausfransen der einzelnen Längsstücke im Vergleich mit den gebundenen Längsstücken kontinuierlich ist.

6. Zusammensetzung nach Anspruch 5, dadurch gekennzeichnet, daß die Eigenflexibilität der Stränge (3), die verzwirnt und einer intermittierenden Reiß-Spinnverfahren unterzogen sind, von der gezwirnten Kombination der Längsstücke aus Stahlfilamenten (1) und Kohlenstoff- oder Graphitfilamenten (2), der Zufälligkeit ihrer Längen und ihrer Anordnung sowie ihres Durchmessers abhängt.

7. Zusammensetzung nach einem der Ansprüche 1 bis 6, dadurch gekennzeichnet, daß die Filamente (2) aus Kohlenstoff oder reinem Graphit mittels Oxidations- und Karbonisations- oder Graphitisationsbehandlungen von Polyacrylnitrilfilamenten hergestellt sind.

8. Zusammensetzung nach einem der Ansprüche 1 bis 7, dadurch gekennzeichnet, daß die Stränge (3), die verzwirnt und der intermittierenden Reiß-Spinnverfahren unterzogen sind, mit einer Graphitdispersion oder mit Korrosionsinhibitoren behandelt sind.

9. Zusammensetzung nach einem der Ansprüche 1 bis 8, dadurch gekennzeichnet, daß die Stränge (3), die verzwirnt und der intermittierenden Reiß-Spinnverfahren unterzogen sind, in wässrige Lösungen von metallischem Zink- oder Wolframpulver eingetaucht oder mit diesen Lösungen besprüht und anschließend ofengetrocknet sind.

10. Zusammensetzung nach einem der Ansprüche 1 bis 9, dadurch gekennzeichnet, daß die Stränge (3), die verzwirnt und der intermittierenden Reiß-Spinnverfahren unterzogen sind, zur Herstellung von Verpackungsmaterial (4) zusammen umflochten sind.

## Revendications

1. Matériau composé pour la fabrication de garnitures d'étanchéité, comprenant des fils constitués par des filaments d'acier non coupés (1) et par des filaments non coupés d'autres matières (2), combinés ensemble et retordus par une opération de filage avec déchirement intermittent, caractérisé en ce que les filaments (2) d'autres matières sont des filaments de carbone ou de graphite pur.

2. Matériau composé selon la revendication 1, caractérisé en ce que les filaments d'acier (1) et les filaments de carbone ou de graphite pur (2) ont un diamètre allant de 4 à 8 micromètres ou plus.

3. Matériau composé selon la revendication 1 ou 2, caractérisé en ce que les fils sont constitués de 20 à 25% de filaments d'acier (1) et de 80 à 75% de filaments de carbone ou de graphite pur (2) ayant un diamètre allant de 4 à 8 micromètres.

4. Matériau composé selon l'une quelconque des revendications 1 à 3, caractérisé en ce que les fils de filaments d'acier non coupés (1) et de filaments de carbone ou de graphite pur non coupés (2) sont retordus et soumis simultanément à une traction intermittente d'une grandeur suffisante pour provoquer, à chaque fois, un déchirement irrégulier d'un ou plusieurs filaments (1,2).

5. Matériau composé selon l'une quelconque des revendications 1 à 4, caractérisé en ce que les fils (3) qui sont retordus et soumis à un processus de filage avec déchirement intermittent, présentent une configuration intrinsèque composée de longueurs de filaments de longueur variable et aléatoire et cette configuration est continue sans effilochage des longueurs individuelles en comparaison avec les longueurs limites.

6. Matériau composé suivant la revendication 5, caractérisé en ce que la flexibilité intrinsèque des fils (3) retordus et soumis à un processus de filage avec déchirement intermittent dépend de la combinaison retordue des longueurs des filaments d'acier (1) et des filaments de carbone ou de graphite (2), du caractère aléatoire de leur longueur et de leur position et de leur diamètre.

7. Matériau composé selon l'une quelconque des revendications 1 à 6, caractérisé en ce que les filaments de carbone ou de graphite pur (2) sont produits par des traitements d'oxydation et de carbonisation ou de graphitisation de filaments de polyacrylonitrile.

8. Matériau composé selon l'une quelconque des revendications 1 à 7, caractérisé en ce que les fils (3) retordus et soumis au processus de filage avec déchirement intermittent sont traités avec une dispersion de graphite ou avec des inhibiteurs de corrosion.

9. Matériau composé selon l'une quelconque des revendications 1 à 8, caractérisé en ce que les fils (3) retordus et soumis au processus de filage avec déchirement intermittent sont plongés dans des solutions aqueuses de poudres de zinc ou de tungstène métalliques ou bien pulvérisés avec ces solutions et ils sont ensuite séchés dans un four.

10. Matériau composé selon l'une quelconque des revendications 1 à 9, caractérisé en ce que les fils (3) retordus et soumis au processus de filage avec déchirement intermittent sont tressés ensemble pour former des garnitures (4).
